# EUROPEAN PATENT SPECIFICATION

(11) **EP 1 939 740 B1**
(45) Date of publication and mention of the grant of the patent: **11.04.2012**
(21) Application number: 07380304.1
(22) Date of filing: 06.11.2007
(51) Int. Cl.: G06F 9/48, H04L 29/08

(54) **Method, system and terminal for the communication and migration of mobile agents by means of multimedia messaging**
Verfahren, System und Vorrichtung für die Kommunikation und Migration von mobilen Agenten mit Mitteln von Multimedia Nachrichten
Procèdè, système et dispositif pour la communication et la migration d'agents mobiles par la messagerie multimédia

(30) Priority: 06.11.2006 ES 200602808
(43) Date of publication of application: 02.07.2008
(73) Proprietor: Vodafone Group PLC, Newbury Berkshire RG14 2FN (GB); Vodafone España, S.A., 28108 Alcobendas (Madrid) (ES)
(72) Inventor: Bernà Forniés, Héctor, 50018 Zaragoza (ES); Caudevilla Laliena, Guillermo, 22003 Huesca (ES); Frisa Rubio, Raquel, 50003 Zaragoza (ES); Sanclemente Abòs, Luis Javier, 22003 Huesca (ES)
(74) Representative: Keston, David Arthur

(56) References cited:
- WO-A-2004/052033
- WO-A-2005/079080
- US-B1- 6 886 024
- FIPA: "FIPA Agent Transport Service Specification" FOUNDATION FOR INTELLIGENT PHYSICAL AGENTS, 12 March 2002 (2002-03-12), XP002480646 FIPA www.fipa.org
- KOZINA B ET AL: "Agent-based Messaging System for M-Learning" ELECTROTECHNICAL CONFERENCE, 2006. MELECON 2006. IEEE MEDITERRANEAN BENALMADENA, SPAIN 16-19 MAY 2006, PISCATAWAY, NJ, USA,IEEE, 16 May 2006 (2006-05-16), pages 1213-1216, XP010927973 ISBN: 978-1-4244-0087-4

## Description

### FIELD OF THE INVENTION

This invention is applied to the telecommunications networks field, and more specifically, to the use and application of MMS (Multimedia Messaging Service) messages in telecommunications networks based on mobile agents.

### BACKGROUND OF THE INVENTION

An intelligent agent is a software entity carrying out certain activities on behalf of another entity and having a certain degree of autonomy in its actions, sociability with other agents, reactivity against situations of the environment and proactivity in carrying out its function. In other words; it is intelligent, it can learn from experience, memorize data and situations, deduce conclusions; it is autonomous, its life cycle is monitored and it makes its own decisions; it is reactive, it can interact with its environment; it is mobile, it can move to other locations, it is cooperative, it can cooperate with other agents or systems.

A mobile agent is an intelligent agent which can migrate or move between different locations. As can be deduced from this definition, the term "mobile" of the expression "mobile agent" is not limited to the scope of mobile telephony or wireless communications, but rather it is applied to any type of computer or telecommunications network and indicates that said agent can migrate or move between different locations.

A mobile agent provides certain technical advantages:
- Reduction of data transmission through the network for client-server applications when partial results involve a large amount of data, since the mobile agent can travel to the service provider carrying out the complete task and returning with the end result.
- Reduction of the impact on the network disconnections, since the mobile agent travels to the destination carrying out a task locally and the agent itself manages its return.
- Autonomous activities which may persist being performed despite a possible failure in the host server.
- Use of services and resources that other elements in the network (more powerful processors, algorithms, databases, hardware, etc...) provide.
- Coordination of actions between several agents.

Despite their autonomy and capacity to move, mobile agents need the support of an agent platform (also called agent framework) providing them with the basic services within the system of agents to which they belong.

The FIPA (Foundation for Intelligent Physical Agents) is the organization formed with the object of producing specification standards for agents and systems based on agents, including mobile agents. It currently depends on the IEEE Computer Society Standards Committee. The FIPA specifications represent a collection of standards attempting to promote interoperability between heterogeneous agents and the services they may represent.

In addition, MMS (Multimedia Messaging Service) is a multimedia messaging system standardized by the 3GGP (Third Generation Partnership Project) and the OMA (Open Mobile Alliance), serving to send messages including text, graphics, sound, video, PIM (Personal Information Management), DRM (Digital Rights Management), etc. in cellular or mobile telephony systems. Multiple applications have been developed on this system in the last few years, especially related to sending audio and graphics as for example disclosed in WO 2004052033.

For this system, the MMS has defined a standard architecture, the key element of which is the MMSC (Multimedia Messaging Service Centre), which is formed by an MMS Proxy-Relay and an MMS Server, which is responsible for receiving and storing the incoming and outgoing MMS messages, further assuring the interoperability with the messaging systems of other mobile telephony operators. The way this element (MMSC) communicates with other elements is defined by different interfaces: MM1, MM2, ..., MM10. MM1 (the interface between a mobile terminal device and the MMSC), MM3 (connecting external messaging systems) and MM7 (the interface between a value added service centre and the MMSC) must be emphasized among them.

As has already been stated, despite their autonomy and capacity to move, intelligent agents need the support of an agent platform providing them with the basic services within the system of agents to which they belong. A directory of mobile agents, the persistence of mobile agents, the communication between different elements of the platform or the management of the life cycle of the agent, for example, can be mentioned among such services.

There are currently several agent platforms allowing the mobility of their agents. These known platforms are mostly housed in known servers having an assigned static IP, such that their identification in the system is simple. Each agent platform must provide the way to identify the elements belonging to a system of agents and the services provided by them. To that end, one or several registers centralizing the system from the server are created. In this way, the agents consult a service of their platform which in turn is in contact with the server to obtain the necessary information.

This creation of a series of centralized registers in a server has been applied to fixed telecommunications networks, in which each device that is connected to the network maintains its connection permanently.

However, in the current IP mobile world, i.e. in IP (Internet Protocol)-based cellular or mobile networks, each device connected to the network does not have a permanent connection, rather one same device can lose the connection due to coverage loss or due to a disconnection initiated by the network for different reasons, which do not belong to the object of this invention. Therefore it is not possible to associate an agent platform to a stable network identifier.

These and other objects and advantages are provided by a method of transmitting MMS messages, a method of receiving MMS messages, a terminal, a network and a system according to the appended claims 1, 9, 17, 23 and 24. Preferred embodiments are defined in the dependent claims.

### OBJECT OF THE INVENTION

The object of this invention is to solve the previously mentioned problems in the following way: associating the MSISDN (Mobile Subscriber ISDN Number) of the SIM card of the cellular or mobile terminal device incorporating said agent platform to the agent platform identifier. This association allows the cellular or mobile device to separate itself from the IP address which has been assigned to it, which provides greater robustness when discovering services and agents in a cellular or mobile data network, such as GPRS, UMTS or WiMAX, for example.

One of the aspects of this invention thus relates to a Multimedia Messaging Service message transmission method in a telecommunications network comprising at least one first and one second terminal, in which said terminals comprise at least one agent platform and one mobile agent respectively, in which at least one of the terminals is a cellular terminal, which method comprises the steps of: in a first terminal, assigning an agent platform identifier of a second terminal, with which the first terminal can exchange information relating to at least one mobile agent, to a header field of a Multimedia Messaging Service message; assigning at least one piece of information relating to a mobile agent to at least one field of the body of said Multimedia Messaging Service message; sending said MMS message from said first terminal to said second terminal.

In one possible embodiment, the information relating to a mobile agent comprises a message between said mobile agent of the first terminal and a mobile agent of the second terminal, preferably an agent communication language message. Said information can be a request message for requesting the sending of a message between mobile agents, an answer message answering a request for the sending of a message between mobile agents, a request message requesting the migration of a mobile agent from the first terminal to the second terminal, an answer message answering a request for the migration of a mobile agent from the first terminal to the second terminal, a refusal to the migration request or an acceptance of the migration request.

In another possible embodiment, the assignment step for assigning at least one piece of information relating to a mobile agent to at least one field of the body of said Multimedia Messaging Service message comprises: assigning a mobile agent identifier to a field of the body of said Multimedia Messaging Service message; assigning an executable code of said mobile agent to a second field of said Multimedia Messaging Service message. The assignment step preferably further comprises: assigning additional data of said mobile agent to a third field of said Multimedia Messaging Service message.

Furthermore, when said second terminal is a cellular terminal, said agent platform identifier of said second terminal is the MSISDN associated with said cellular terminal, and when said second terminal is a non-cellular terminal, said agent platform identifier of said second terminal is a short code address associated with said non-cellular terminal.

Another aspect of this invention relates to a method of receiving a Multimedia Messaging Service message in a telecommunications network comprising at least one first and one second terminal, which in turn comprise at least one agent platform and a mobile agent respectively, in which at least one of the terminals is a cellular terminal, which method comprises the steps of: receiving a Multimedia Messaging Service message in a first terminal; extracting from at least one field of the body of said Multimedia Messaging Service message at least one piece of information relating to a mobile agent coming from a second terminal; in which the step of receiving a Multimedia Messaging Service message comprises extracting an agent platform identifier of said first terminal from a header field of said Multimedia Messaging Service message.

In another aspect, this invention relates to a terminal of a telecommunications network comprising: at least one mobile agent; at least one mobile agent platform to which said at least one mobile agent belongs; means for creating a Multimedia Messaging Service message; means for assigning to a header field of said Multimedia Messaging Service message an agent platform identifier of a second terminal with which the terminal can exchange information relating to at least one mobile agent; means for assigning at least one piece of information relating to a mobile agent to a field of the body of said Multimedia Messaging Service message; means for sending said MMS message to said second terminal. The terminal can be a cellular terminal or a non-cellular terminal.

This invention also relates to a telecommunications network comprising at least one of these terminals.

Finally, this invention relates to a telecommunications system comprising: a cellular telecommunications network, a Multimedia Messaging Service centre which in turn comprises an MMS Proxy/Relay and an MMS Server; in which the cellular telecommunications network comprises at least one of said terminals.

### BRIEF DESCRIPTION OF THE DRAWINGS

For the purpose of aiding to better understand the features of the invention according to a preferred practical embodiment thereof and to complement this description, a set of illustrative and non-limiting drawings is attached as an integral part thereof. In these drawings:
Figure 1 shows the conventional structure of the mobile agent identifier.
Figure 2 shows the structure of the agent platform identifier according to one aspect of this invention.
Figure 3 shows the architecture of a system according to this invention.
Figure 4A shows the structure of an MMS message for sending or for the migration of mobile agents.
Figure 4B shows the structure of an MMS message for sending messages between agents or ACL messages.
Figures 5A and 5B show the flow for sending messages for communication between mobile agents.
Figures 6A and 6B show the flow for sending messages for the migration of mobile agents between terminal devices.

### DETAILED DESCRIPTION OF THE INVENTION

Throughout this specification the term "comprise" and its derivatives must not be interpreted in an exclusive or limiting sense, i.e. it must not be interpreted in the sense of excluding the possibility that the element or concept which it refers to includes additional steps or elements.

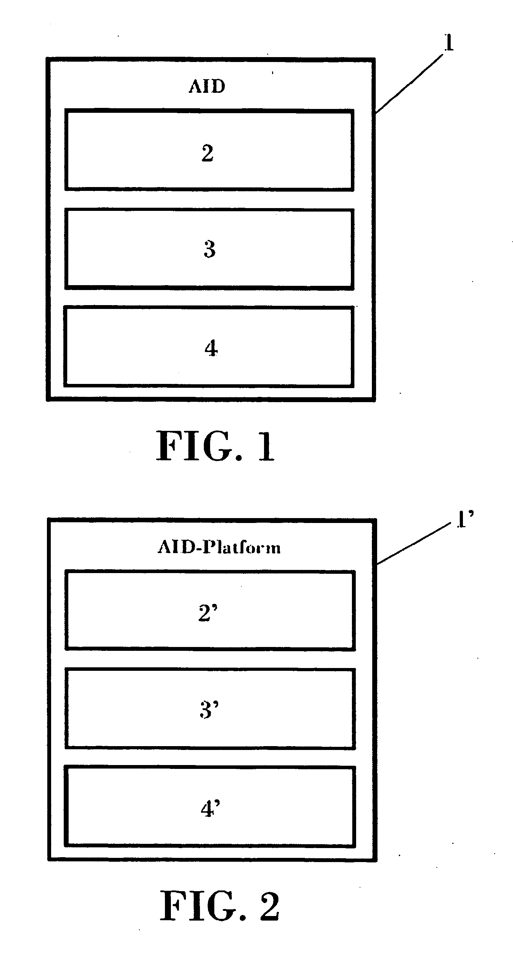

Figure 1 shows the conventional structure of the mobile agent identifier (AID) (1). In a minimal configuration the mobile agent identifier (AID) (1) comprises a single field called name (2). However, the mobile agent identifier (AID) (1) can also comprise information on the status, the agent platforms through which it has passed previously, as well as other parameters, depending on the implementation of each agent platform. As Figure 1 shows, the structure of the mobile agent identifier (AID) (1) can further comprise several optional fields such as addresses (3) and resolvers (4).

The name (2) is a global unique identifier which can be used as a unique reference expression of the mobile agent. The FIPA recommends combining the name (2) of the mobile agent with the address of the agent platform in which it has been created, separated by the character '@'. Figure 1 thus shows how the name field (2) comprises this association: AgentName@HomeAgentPlatformAddress. Examples of this association between the name of the agent and the address of the agent platform in which the agent has been created are Agent1 @127.0.0.1 or Agent1 @platform1.

The address field (3) is formed by a list of transport addresses towards which a message can be sent. As said before, this field is optional.

The resolver field (4) is formed by a list of addresses of name resolution services. This field is also optional.

In addition an agent platform is identified as one more agent within a system or network. Figure 2 thus shows the structure of the agent platform identifier (AID-platform) (1'). As shown in Figure 2, as in the case of the structure of the mobile agent identifiers (AID) (1) of Figure 1, in a minimal configuration, the agent platform identifier (AID-platform) (1') comprises at least one single field called name (2'). However, the structure of the agent platform identifier (AID-platform) (1') can further comprise several optional fields such as addresses (3') and resolvers (4'). This invention uses the presence of the address field (3') of the structure of the agent platform identifier (AID-platform) (1').

As shown in Figure 2, this invention associates the address field (3') of the structure (1') of the agent platform identifier (AID-platform) with the MSISDN number of the terminal device comprising said agent platform and which is registered in the mobile telecommunications network in which one or more mobile agents are located. As has been previously explained, said mobile telecommunications network can be any network based on a circuit switch domain (CS) and/or a packet switch domain (PS), such as the UMTS or GSM/GPRS network for example, and supporting the MMS Multimedia Messaging Service standardized by 3GPP and OMA. The remaining fields, name (2') and resolvers (4'), remain identical to those of Figure 1, i.e. to the fields of the conventional structure of the mobile agent identifier (AID) (1).

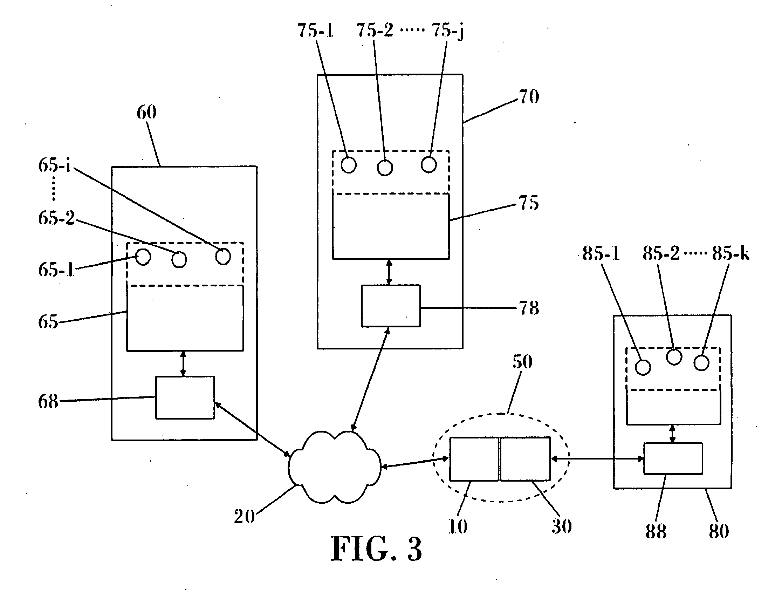

Figure 3 shows a possible network architecture according to this invention. This architecture comprises an MMS Proxy-Relay (10), which is the element of the MMS messaging system with which an MMS client interacts. The MMS Proxy Relay (10) provides access to the components providing message storage services, and is responsible for the messaging activities with other available messaging systems. The architecture of Figure 3 also comprises an MMS Server (30), which is the element of the MMS messaging system providing storage services for multimedia messages. The MMS Proxy-Relay (10) together with the MMS server (30) form part of a Multimedia Messaging Service Centre (MMSC) (50), which is in charge of receiving and storing incoming and outgoing MMS messages, further assuring the interoperability with the messaging systems of other mobile telephony operators.

Different types of networks can be connected to said MMSC (50), such as cellular or mobile networks (20) as well as Value Added Services Provider (VASP). The MMS value added service (VAS) applications in many cases behave as an MMS user agent, in addition to providing functionalities such as MMS forwarding between the MMS VAS and MMSC (50) applications. The MMS VAS applications are value added service applications for the MMS users, such as news, weather and photo album creation services, for example.

Figure 3 further shows different terminal devices (60, 70, 80) that can be connected to the cellular or mobile network (20) directly or to the cellular or mobile network (20) through the MMSC (50). From now on, these terminal devices will simply be called "terminals". A series of cellular or mobile terminals (60, 70) can thus be connected to the cellular or mobile network (20), and a series of non-cellular terminals (80) can be connected to the MMSC (50). A cellular or mobile terminal (60, 70) is understood to be that having the capacity to be directly connected to a cellular or mobile network, such as GPRS or UMTS. This capacity is what differentiates a cellular or mobile terminal (60, 70) from a non cellular or mobile terminal (80). Although terminal 80 is not a cellular or mobile terminal, it is registered in the cellular or mobile telecommunications network (20) with a short code address identifying each non-cellular terminal (80). These devices are thus terminals because the MMS messages are received or originated in them. An MMS message can translate this short code address to a routable address to be used in the transport layer, such as a URI (Uniform Resources Identifier) for example.

From now on, to avoid confusions between the term "mobile" when referring to a "mobile agent" and when referring to cellular or wireless communications technology, the term "mobile" will be reserved to define "mobile agents" and the term "cellular" will be used to define both wireless networks (for example, GPRS or UMTS) and terminals which can be connected thereto.

Each of these terminals (60, 70, 80) has an agent platform (65, 75, 85) integrated providing basic services to a series of mobile agents (65-1, 65-2, ..., 65-i, 75-1, 75-2, ..., 75-j, , 85-1, 85-2, ..., 85-k) associated with each agent platform (65, 75, 85). Each of these agent platforms (65, 75, 85) has an agent platform identifier (AID-platform) (1') as shown in Figure 2. In the case of non-cellular terminals (80), the MMS value added service (VAS) applications (88) in many cases behave as an MMS user agent, in addition to providing functionalities such as MMS forwarding between the MMS VAS and MMSC (50) applications. Each mobile agent (65-1, 65-2, ..., 65-i, 75-1, 75-2, ..., 75-j, , 85-1, 85-2, ..., 85-k) in turn has an agent identifier (AID) (1) as shown in Figure 1.

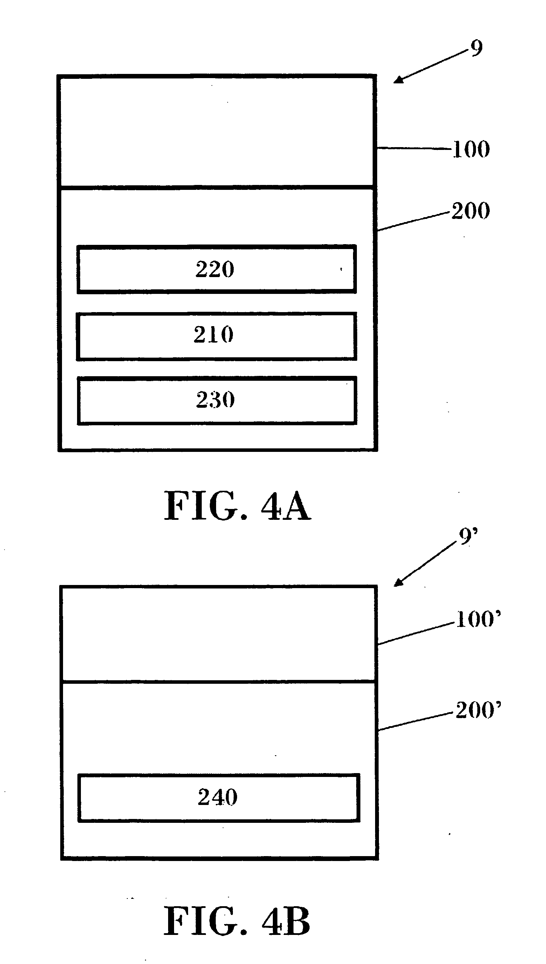

The cellular terminals (60, 70) further comprise an interface (68, 78) between the cellular network (20) and the agent platform (65, 75) of the terminal (60, 70) itself. This interface is called an MMS User Agent. This is the element of the MMS messaging system interacting with the user and can receive an MMS from the MMS messaging system, identifying the contents of the MMS and reproducing them as indicated in the MMS. In addition to the normal and standardized contents of an MMS such as text, graphics, sound, video, PIM (Personal Information Management), DRM (Digital Rights Management), etc., this invention allows adding the following contents of an MMS that must be identified by the MMS user agent (68, 78) and reproducing them: the mobile agent code, the mobile agent identifier (AID), additional mobile agent data and a message between agents or ACL message. The MMS user agent (68, 78) identifies the contents of the MMS as they are associated with a specific content-type according to the content shown in Figures 4A and 4B, which are described below. In the context of this invention, content-type is understood to be the header indicating the type and the subtype of the message content and which is used to facilitate the processing thereof.

As stated, the MMS value added service (VAS) (88) applications act as an MMS user agent in the non-cellular terminals (80) which are connected to the MMSC (50), which agent is equivalent to the MMS user agents (68, 78) of the cellular terminals (60, 70), as shown in Figure 3. They also have a mobile agent platform (85). The MMS value added service (VAS) (88) application has the same structure as an MMS user agent (68, 78) and is connected directly to the Multimedia Messaging Service Centre (MMSC) (50).

This invention integrates the mobile agents (65-1, 65-2, ..., 65-i, 75-1, 75-2, ..., 75-j, 85-1, 85-2, ..., 85-k) by means of using MMS messaging. As a result of this integration of mobile agents of different networks, the location of mobile agents in the network architecture, the sending of messages between mobile agents and the migration of mobile agents is enabled. This invention thus allows mobile agents (65-1, 65-2, ..., 65-i, 75-1, 75-2, ..., 75-j, 85-1, 85-2, ..., 85-k) to be executed in, migrate to and communicate with any terminal (60, 70, 80) that is registered in a cellular communications network (20), such as GPRS or UMTS, with the capacity of sending and receiving MMSs.

Given that the mobile agents are software programs that need to be executed in order to carry out the tasks for which they have been programmed, in the context of this invention the execution of a mobile agent is understood to be the initiation and processing of the instructions contained in the executable mobile agent code (210) together with its additional data (230) in an execution environment that can be an operating system such as any system from the Windows or Linux/GNU family, a specific platform such as Java or any other conventional execution environment.

### Migration of mobile agents

This invention allows the migration of mobile agents, i.e. the passage of a mobile agent from one terminal to another. The migration of mobile agents is based on sending the mobile agent in the content of an MMS message as shown in Figure 4A.

Figure 4A shows the structure of an MMS (Multimedia Messaging Service) message for sending or for the migration of mobile agents. As can be observed in Figure 4A, each MMS message comprises an MMS header (100) and a Message Body (200). The "To" field of the header of the MMS message (9) is completed with the MSISDN of the address field (3') of the destination agent platform identifier (AID-platform) (see Figure 2). The MMS message body (200) in turn comprises the following fields:
- Mobile agent code (210) comprising the binary which allows executing the mobile agent (65-1, 65-2, ..., 65-i, 75-1, 75-2, ..., 75-j, , 85-1, 85-2, ..., 85-k) associated with the content-type: agent/code. In other words, this field comprises an executable code.
- Mobile agent identifier (AID) (220), comprising the unique mobile agent identifier associated with the content-type: agent/id.
- Additional mobile agent data (230) comprising the information necessary for executing the mobile agent (65-1, 65-2, ..., 65-i, 75-1, 75-2, ..., 75-j, , 85-1, 85-2, ..., 85-k) associated with the content-type: agent/data.

Returning to Figure 3, the MMS user agent (68, 78) of the terminal (60, 70, 80) receiving an MMS message can identify, by means of the content-type of the MMS received, that the content of said MMS message is a mobile agent (65-1, 65-2, ..., 65-i, 75-1, 75-2, ..., 75-j, 85-1, 85-2, ..., 85-k). This process comprises identifying the following values in the content-type header fields of the MMS message: agent/code (210), agent/id (220) and agent/data (230). In other words, the content-type of any MMS message is: application/vnd.wap.multipart.related. This content defines that the body (200) of the MMS message (9) has several defined parts (see the word "multipart" of the "content-type"). When a message is "multipart", boundaries are defined in the body (200) of the message (9). At the beginning of this part of the body (200) of message (9), the specific content of that part is defined. This definition is made with the "content-type" header (210, 220, 230). These headers are called headers of each of the parts of the body (200) of the MMS multimedia message (9). The MMS user agent (68, 78) then communicates to the agent platform (65, 75, 85) of its terminal (60, 70, 80) the reception of the message and the agent platform (65, 75, 85) is responsible for executing the mobile agent (65-1, 65-2, ..., 65-i, 75-1, 75-2, ..., 75-j, 85-1, 85-2, ..., 85-k) from what is attached by the MMS.

This sending or migration can be originated in and/or received by both a cellular terminal (60, 70) and a non-cellular terminal (80), since the non-cellular terminal (80) comprises the MMS value added service VAS (88) applications. In many cases the latter behave as an MMS user agent in addition to providing functionalities such as MMS forwarding between the MMS VAS and MMSC (50) applications. Furthermore, the non-cellular terminal (80) also has an agent platform (85) identical to that of the cellular terminals (60, 70). The process for the migration of a mobile agent of a first terminal (60) to a second terminal (70) is based on sending it to the agent platform (75) of the destination terminal (70), which is identified by the MSISDN in the address field (3') of the agent platform identifier (AID-platform). This MSISDN is the destination number of the MMS message which has the message between agents attached thereto. The "To" field of the header (100) of the MMS (9), in which the MSISDN of the address field (3') of the destination agent platform identifier (AID-platform) is inserted, is used to identify the recipient of the MMS message (see Figure 2).

Unlike the messages between agents or ACL messages, which are described below, which are used internally by the agent platform or by the mobile agents without the direct intervention of the user of the cellular network, in agent migration messages the user, who actively sends said message, does intervene. Furthermore, this possibility of mobile agent migration can be used by different applications available in a cellular terminal.

The MM1 interface, standardized by 3GPP, is used for the communication between an originating or destination cellular terminal (60, 70) of the migration of the mobile agent and the MMSC (50).

The MM7 interface, standardized by 3GPP, is used for the communication between an originating or destination non-cellular terminal (80) of the migration of the mobile agent and the MMSC (50), if said terminal (80) is a value added service provider (VASP).

The terminal (70) receiving the MMS message or messages must determine that the content of said MMS is a mobile agent (65-1, 65-2, ..., 65-i, 85-1, 85-2, ..., 85-k) once said message has been completely received. The MMS user agent of the destination terminal (70) can identify that it is a mobile agent (65-1, 65-2, ..., 65-i, 85-1, 85-2, ..., 85-k) by means of the content-type (210, 220, 230, 340) of the MMS received. As stated previously, this process is carried out by means of identifying the following values in the content-type header fields of the MMS message body (200): agent/code (210), agent/id (220) and agent/data (230). The MMS user agent (78) of the terminal (70) that has received the MMS then communicates to the agent platform (75) the reception of the message and the agent platform (75) is responsible for executing the mobile agent (65-1, 65-2, ..., 65-i, 85-1, 85-2, ..., 85-k) from what is attached by the MMS.

The recipient of the MMS message, in which the mobile agent is contained, is the MSISDN of the address field (3') of the agent platform identifier (AID-platform) of the destination terminal. This recipient, which in this invention is the MSISDN of the destination agent platform, is indicated in the "To" field of the header (100) of the MMS message (9).

A series of examples of the migration of mobile agents between both cellular and non-cellular terminals is shown below with reference to Figure 3.

### Example 1: Migration of a mobile agent from a cellular terminal to another cellular terminal

The cellular terminal (60) of Figure 3 wishes to send a mobile agent (65-i) belonging to the agent platform (65) to the cellular terminal (70), comprising the agent platform (75).

To that end, a Multimedia Messaging Service message (MMS message) (9) is created in the terminal (60) using the MMS user agent (68), and the MSISDN of the address field (3') of the destination agent platform identifier (AID-platform) (75) of the destination terminal (70) is assigned to the "To" field of the header (100) of said MMS message (9).

The identifier (AID) of the mobile agent (65-i) that is to migrate is then assigned to a first field (220) of the body (200) of the MMS message (9).

The executable code of said mobile agent (65-i) is then assigned to a second field (210) of said MMS message (9). Additional data of the mobile agent (65-i) are preferably assigned to a third field (230) of the MMS message (9).

Said MMS message (9) is then sent from the first cellular terminal (60) to the second cellular terminal (70). The MMS message (9) travels through the network cellular (20) and reaches the MMSC (50) using the MM1 interface. The MMSC (50) sends the MMS to the second cellular terminal (70) according to the standardized processes for sending MMSs.

Once the MMS message has been completely received in the destination terminal (70), this terminal must determine that the content of said MMS is a mobile agent (65-i). To that end, the MMS user agent (78) of the destination terminal (70) identifies the headers of the fields of the body (200) of the MMS (9) received, i.e. it identifies the agent/code (210), agent/id (220) and agent/data (230) values. Then the MMS user agent (78) of the terminal (70) communicates to the agent platform (75) the reception of the MMS message and the agent platform (75) is responsible for executing the executable code of the mobile agent (65-i) which arrived encapsulated in or attached to the MMS.

### Example 2: Migration of a mobile agent from a cellular terminal to a non-cellular terminal

The cellular terminal (60) of Figure 3 wishes to send a mobile agent (65-i) belonging to the agent platform (65) to the non-cellular terminal (80), comprising the agent platform (85).

To that end, a Multimedia Messaging Service message (MMS message) (9) is created in the terminal (60) using the MMS user agent (68), and the short message address of the address field (3') of the destination agent platform identifier (AID-platform) of the destination terminal (80) is assigned to the "To" field of the header (100) of said MMS message (9).

The identifier (AID) of the mobile agent (65-i) that is to migrate is then assigned to a first field (220) of the body (200) of the MMS message (9).

The executable code of said mobile agent (65-i) is then assigned to a second field (210) of said MMS message (9). Additional data of the mobile agent (65-i) is preferably assigned to a third field (230) of the MMS message (9).

Next, said MMS message (9) is sent from the first terminal (60), which is cellular, to the second terminal (80), which is not cellular. The MMS message (9) travels through the cellular network (20) and reaches the MMSC (50) using the MM1 interface. The MMSC (50) sends the MMS to the second non-cellular terminal (80) through the interface MM7 according to the standardized processes for sending MMSs. As the non-cellular terminal (80) is identified with a short code address, the MMSC (50) translates this address to a routable address which can be used by the transport layer, such as a URI for example.

Once the MMS message has been completely received in the destination terminal (80), it identifies the headers of the fields of the body (200) of the MMS (9) received, i.e. it identifies the agent/code (210), agent/id (220) and agent/data (230) values. In this case of the non-cellular terminal (80), the MMS value added service (88) application carries out the MMS user agent functions. Then it communicates to the agent platform (85) the reception of the message and the agent platform (85) is responsible for executing the executable code of the mobile agent (65-i) which arrived encapsulated in or attached to the MMS.

### Example 3: Migration of a mobile agent from a non-cellular terminal to a cellular terminal

The non-cellular terminal (80) of Figure 3 wishes to send a mobile agent (85-k) belonging to the agent platform (85) to the cellular terminal (70), comprising the agent platform (75).

To that end, a Multimedia Messaging Service message (MMS message) (9) is created in the terminal (80) using the MMS value added service VAS (88) application, and the MSISDN of the address field (3') of the destination agent platform identifier (AID-platform) (75) of the destination terminal (70) is assigned to the "To" field of the header (100) of said MMS message (9).

The identifier (AID) of the mobile agent (85-k) that is to migrate is then assigned to a first field (220) of the body (200) of the MMS message (9).

The executable code of said mobile agent (85-k) is then assigned to a second field (210) of said MMS message (9). Additional data of the mobile agent (85-k) is preferably assigned to a third field (230) of the MMS message (9).

Next, said MMS message (9) is sent from the non-cellular terminal (80) to the cellular terminal (70). The MMS message (9) travels through the MM7 interface to the MMSC (50). The MMSC sends the MMS message to the cellular terminal (70) according to the standardized processes, using the cellular network (20) and the MM1 interface.

Once the MMS message has been completely received in the destination terminal (70), this terminal must determine that the content of said MMS is a mobile agent (85-k). To that end, the MMS user agent (78) of the destination terminal (70) identifies the headers of the fields of the body (200) of the MMS (9) received, i.e. it identifies the agent/code (210), agent/id (220) and agent/data (230) values. Then the MMS user agent (78) of the terminal (70) communicates to its agent platform (75) the reception of the MMS message and the agent platform (75) is responsible for executing the executable code of the mobile agent (85-k) which arrived encapsulated in or attached to the MMS.

### Sending messages between mobile agents

With regard to Figure 4A, the migration or sending of mobile agents between different terminals is described. The present invention also allows communication between mobile agents, for which it sends a so-called *"message between agents"* or ACL message in the content of an MMS message, as illustrated in Figure 4B.

Figure 4B shows the structure of an MMS message for sending messages between agents or ACL (Agent Communication Language) messages. As can be observed in Figure 4B, each MMS message (9') comprises an MMS header (100'), similar to that of the MMS messages (9) used for the migration of mobile agents (Figure 4A), and a message body (200'). Unlike the case represented in Figure 4A, the body (200') of the MMS message (9') comprises in this case the following field:
- Message between agents or ACL message (240), comprising a message exchanged in ACL format associated with the content-type: agent/message.

These *"messages between agents"* are conventional or standard communication messages between the parts forming a system of agents including mobile agents (65-1, 65-2, ..., 65-i, 75-1, 75-2, ..., 75-j, 85-1, 85-2, ..., 85-k) and the agent platforms (65, 75, 85) which contain them. ACL messages are currently considered, as they are the messages of the protocol in force standardized by the FIPA. In the future, it could be any type of standard message for communicating between agents. As has been described with reference to Figure 4B, the only content of the body (200') of the MMS message (9') is an agent/message value which is indicated in the "content/type" field of the header of each of the parts of the multimedia message, which in this case of a message between agents only contains one part. The destination address, or that is, the MSISDN of the address field of the destination platform identifier is assigned to the "To" field of the header (100') of the MMS message (9').

The process for sending a message between mobile agents, for example an ACL message, is to send it to the agent platform of the destination terminal. In other words, for sending one of these messages between a mobile agent (65-1, 65-2, ..., 65-i) of a first terminal (60) and a second mobile agent (75-1, 75-2, ..., 75-j) of a second terminal (70), the agent platform (75) of the destination terminal (70) is chosen as a destination. This agent platform (75) is identified by the MSISDN in the address field (3') of the agent platform identifier (AID-platform). Therefore, this MSISDN is the destination number of the MMS message (9') which is assigned to the "To" field of the header (100') of the MMS message (9').

The MMS user agent (78) of the terminal (70) receiving the MMS message can identify, by means of the content-types of the MMS received, that the message received is a message between agents or ACL message (content-type: agent/message) (240). To that end, the header of each of the parts of the body (200') of the message multimedia (9') containing a content-type (240) with the following value: agent/message is identified. Then the MMS user agent (78) of the terminal (70) receiving the MMS message communicates to the agent platform (75) of its terminal (70) the reception of the message and delivers the message between agents or ACL message to said platform (75) from what is attached by the MMS.

These messages between agents or ACL messages son used internally by the agent platform (65, 75) or by the mobile agents (65-1, 65-2, ..., 65-i, 75-1, 75-2, ..., 75-j), without the direct intervention of the user of the cellular network.

The MM1 interface, standardized by 3GPP, is used for communication between an originating or destination cellular terminal (60, 70) of the communication between mobile agents and the MMSC (50).

The MM7 interface, standardized by 3GPP, is used for communication between an originating or destination non-cellular terminal (80) of the communication between mobile agents and the MMSC (50) if said device (80) is a value added service provider (VASP).

The terminal (60, 70, 80) receiving one (or several) MMS messages must determine that the content of said MMS is a "message between agents" or ACL message once said message has been completely received. The MMS user agent (68, 78) can identify by means of the content-type: agent/message (240) of the header of each of the parts of the body (200') of the MMS (9') received that it is a message between agents or ACL message. Then the MMS user agent (68, 78) communicates to the agent platform (65, 75) of its terminal (60, 70) the reception of the message and the agent platform (65, 75) is responsible for transmitting the ACL message contained in or attached to the MMS to the corresponding destination. The information of the destination mobile agent of the message is included in the ACL message as defined by the FIPA and the agent platform is responsible for correctly sending it.

As has been said, the recipient of the MMS message in which the "message between agents" is contained is the MSISDN of the address field (3') of the agent platform identifier (AID-platform) of the destination terminal.

A series of examples for sending messages between mobile agents from different terminals, both cellular and non-cellular, is shown below with reference to Figure 3.

### Example 4: Sending a message between agents from one cellular terminal to another cellular terminal

A mobile agent (65-i) belonging to an agent platform (65) of the cellular terminal (60) of Figure 3 wishes to communicate, through a message between agents or ACL message, with a mobile agent (75-j) belonging to an agent platform (75) of the cellular terminal (70).

To that end, a Multimedia Messaging Service message (MMS message) (9') is created in the terminal (60) using the MMS user agent (68), and the MSISDN of the address field (3') of the destination agent platform identifier (AID-platform) (75) of the destination terminal (70) is assigned to the "To" field of the header (100') of said MMS message (9').

A message between agents or an agent communication language (ACL) message is then assigned to a field (240) of the body (200') of said MMS message (9').

Next, said MMS message (9') is sent from the first cellular terminal (60) to the second cellular terminal (70). The MMS message (9') travels through the network similarly to that explained in Example 1.

Once the MMS message has been completely received in the destination terminal (70), this terminal must determine that the content of said MMS is a message between mobile agents.

To that end, the MMS user agent (78) of the destination terminal (70) identifies the header of each of the parts of the body (200') of the MMS (9') received, i.e. it identifies the agent/message (240) value. Then, the MMS user agent (78) communicates to its agent platform (75) the reception of the MMS message (9') and the agent platform (75) is responsible for transmitting the ACL message contained in or attached to the MMS to the corresponding destination mobile agent (75-j). The information of the destination agent of the message is included in the ACL message as defined by the FIPA and the agent platform is responsible for correctly sending it.

### Example 5: Sending a message between agents from a cellular terminal to a non-cellular terminal

A mobile agent (65-i) belonging to an agent platform (65) of the cellular terminal (60) of Figure 3 wishes to communicate, through a message between agents or ACL message, with a mobile agent (85-k) belonging to an agent platform (85) of the non-cellular terminal (80).

To that end, a Multimedia Messaging Service message (MMS message) (9') is created in the terminal (60) using the MMS user agent (68), and the short message address of the address field (3') of the agent platform identifier (AID-platform) of the destination terminal (80) is assigned to the "To" field of the header (100') of said MMS message (9').

A message between agents or an agent communication language (ACL) message is then assigned to a field (240) of the body (200') of said MMS message (9').

Next, said MMS message (9') is sent from the first cellular terminal (60) to the second non-cellular terminal (80). The MMS message (9') travels through the network similarly to that explained in Example 2.

Once the MMS message has been completely received in the destination terminal (80), this terminal must determine that the content of said MMS is a message between mobile agents.

To that end, once the MMS message has been completely received in the destination terminal (80), this terminal identifies the header of each of the parts of the body (200') of the MMS (9') received, i.e. it identifies the agent/message (240) value, using the MMS value added service VAS (88) application. Then it communicates to the agent platform (85) the reception of the MMS message and the agent platform (85) is responsible for transmitting the ACL message contained in or attached to the MMS to the corresponding destination mobile agent (85-k). The information of the destination agent of the message is included in the ACL message as defined by the FIPA and the agent platform is responsible for correctly sending it.

### Example 6: Sending a message between agents from a non-cellular terminal to a cellular terminal

A mobile agent (85-k) belonging to an agent platform (85) of the non-cellular terminal (80) of Figure 3 wishes to communicate, through a message between agents or ACL message, with a mobile agent (75-j) belonging to an agent platform (75) of the cellular terminal (70).

To that end, a Multimedia Messaging Service message (MMS message) (9') is created in the terminal (80) using the MMS value added service VAS (88) application, and the MSISDN of the address field (3') of the agent platform identifier (AID-platform) (75) of the destination terminal (70) is assigned to the "To" field of the header (100') of said MMS message (9').

A message between agents or an agent communication language (ACL) message is then assigned to a field (240) of the body (200') of said MMS message (9').

Next, said MMS message (9') is sent from the first non-cellular terminal (80) to the second cellular terminal (70). The MMS message (9') travels through the network similarly to that explained in Example 3.

Once the MMS message has been completely received in the destination terminal (70), this terminal must determine that the content of said MMS is a message between mobile agents.

To that end, the MMS user agent (78) of the destination terminal (70) identifies the header of each of the parts of the body (200') of the MMS (9') received, i.e. it identifies the value of the agent/message (240). Then, the MMS user agent (78) communicates to its agent platform (75) the reception of the MMS message and the agent platform (75) is responsible for transmitting the ACL message contained in or attached thereto to the corresponding destination mobile agent (75-j). The information of the agent destination of the message is included in the ACL message as defined by the FIPA and the agent platform is responsible for correctly sending it.

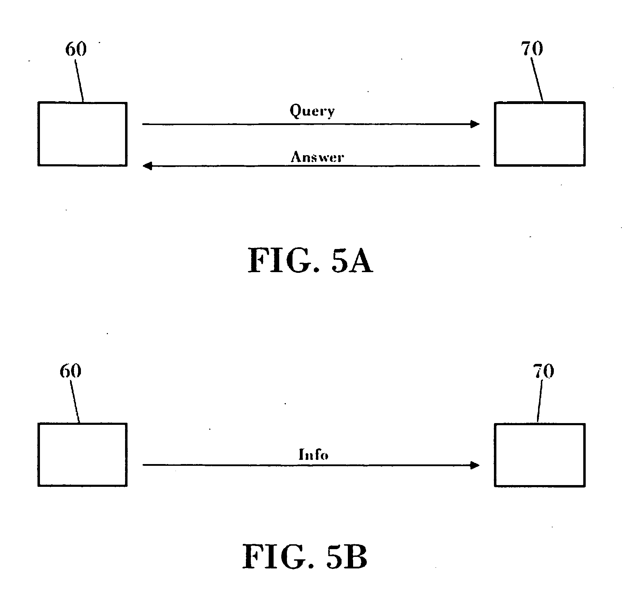

Figures 5A and 5B show the flow for sending messages between agents or ACL messages. All communication messages travel as MMS message content, using the architecture shown in Figure 3. When a message waits for an answer, two types of messages are exchanged: a first "Query" message with the query and a second "Answer" message with the answer. This is illustrated in Figure 5A. These messages with the query and the answer are messages between agents or ACL messages, as those described in Examples 4 to 6. These messages between agents or ACL messages are generated by the mobile agents (65-1, 65-2, ..., 65-i, 75-1, 75-2, ..., 75-j, 85-1, 85-2, ..., 85-k) with the object of communicating between each other, and they are structured according to the FIPA standardization. They contain information relating to the tasks carried out by the agents. When a message does not wait for an answer, a single "Info" message with a certain piece of information is sent. This is illustrated in 5B.

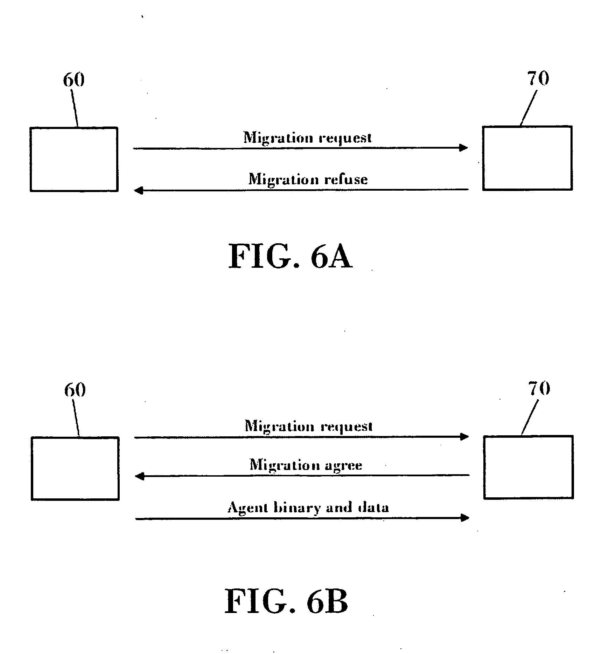

Figures 6A and 6B show the flow of messages for the migration of mobile agents. All communication messages travel as MMS message content, using the architecture shown in Figure 3. The first message that the originating terminal sends to the destination terminal is always a "Migration request". If the migration is rejected by the destination, the answer message is a rejection message "Migration refuse". This is illustrated in Figure 6A. If in contrast the migration is accepted by the destination, the answer message is an acceptance message "Migration agree". The migration request, migration agree and migration refuse messages are messages between agents or ACL messages, as those described in Examples 4 to 6. Then the originating terminal sends a message with the agent identifier, the binary code (executable code) and the additional migrating agent data ("Agent Identifier, Agent Binary and Data"). This is illustrated in Figure 6B. The executable code of the migrating agent is encapsulated in the body (200) of the MMS message (9), specifically in the "agent/code" (210) field, as shown in Figure 4A. The migrating agent identifier is encapsulated in the body of the MMS message (200), specifically in the "agent/id" (220) field, as shown in Figure 4A. The additional data of the migrating agent are encapsulated in the body of the MMS message (200), specifically in the "agent/data" (230) field, as shown in Figure 4A.

In view of this description and set of drawings, the skilled person in the art could understand that the invention has been described according to several preferred embodiments thereof, however multiple variations can be introduced in said preferred embodiments, without departing from the object of the invention as it has been claimed.

## Claims

1. A method of transmitting Multimed a Messaging Service messages in a telecommunications network comprising at least one first and one second terminal, where said terminals comprise at least one agent platform and one mobile agent respectively, where at least one of the termirals is a cellular terminal, the method comprising the steps of:
- in a first terminal (60), assigning to a field of the header (100, 100') of a Multimedia Messaging Service message (9, 9') an identifier (3') of an agent platform (75, 85) of a second terminal (70, 30) with which the first terminal (60) can exchange information relating to at least one mobile agent (65-1, 65-2, 65-i);
- assigning to at least one field (210, 220, 230, 240) of the body (200, 200') of said Multimedia Messaging Service message (9, 9') at least one piece of information relating to a mobile agent (65-1, 65-2, ..., 65-i);
- sending said MMS message (9, 9') from said first terminal (60) to said second terminal (70, 80),
the method being **characterized in that** said step for assigning at least one piece of information relating to a mobile agent (65-1, 65-2, ... , 65-i) comprises:
- assigning to a field (220) of the body (200) of said Multimedia Messaging Service message (9) a mobile agent (65-1, 65-2, ... , 65-i) identifier;
- assigning to a second field (210) of said Multimedia Messaging Service message (9) an executable code of said mobile agent (65-1, 65-2, ..., 65-i).

2. A method according to claim 1, **characterized by** the fact that said piece of information relating to a mobile agent comprises a message between said mobile agent (65-1, 65-2, ..., 65-i) of the first terminal (60) and a mobile agent (75-1, 75-2, ..., 75-j, 85-1, 85-2, ..., 85-k) of the second terminal (70, 80).

3. A method according to claim 2, **characterized by** the fact that said message is an agent communication language message.

4. A method according to any of claims 2 or 3, **characterized by** the fact that said piece of information is a request message requesting the sending of a message between mobile agents or is an answer message answering a request for the sending of a message between mobile agents.

5. A method according to any of claims 2 or 3, **characterized by** the fact that said piece of information is a migration request message requesting the migration of a mobile agent from the first terminal to the second terminal or an answer message answering a migration request for the migration of a mobile agent from the first terminal to the second terminal, said answer message being either a refusal to the migration request or an acceptance of the migration request.

6. A method according to claim 1, **characterized by** the fact that said assignment step further comprises:
- assigning to a third field (230) of said Multimedia Messaging Service message (9) additional data of said mobile agent (65-1, 65-2, ..., 65-i).

7. A method according to any of the previous claims, **characterized by** the fact that when said second terminal (70, 80) is a cellu ar terminal (70), said identifier (3') of the agent platform (75, 85) of said second terminal (70) is the MSISDN associated with said cellular terminal (70).

8. A method according to any of claims 1 to 3, **characterized by** the fact that when said second terminal (70, 80) is a non-cellular terminal (80), said identifier (3') of the agent platform (85) of said second terminal (80) is a short code address associated with said non-cellular terminal (80).

9. A method of receiving Multimedia Messaging Service messages in a telecommunications network comprising at teas one first and one second terminal, in turn comprising at least one agent platform and one mobile agent respectively, where at least one of the terminals is a cellular-terminal, comprising the steps of:
- receiving in a first terminal a Multimedia Messaging Service message (9, 9');
- extracting from at least one field (210, 220, 230, 240) of the body (200, 200') of said Multimedia Messaging Service message (9, 9') at least one piece of information relating to a mobiie agent coming from a second terminal;
wherein the step of receiving a Multimedia Messaging Service message (9, 9') comprises extracting from a field of the header (100, 100') of said Multimedia Messaging Service message (9, 9') an agent platform identifier (3') of said first terminal,
the method being **characterized in that** said step for extracting at least one piece of information relating to a mobile agent coming from a second terminal comprises:
- extracting an executable code of said mobile agent;
- extracting an identifier of said mobile agent.

10. A method according to claim 9, **characterized by** the fact that said piece of information relating to a mobile agent coming from a second terminal comprises a message between said mobile agent comir g from the second terminal and a mobile agent of the first terminal.

11. A method according to claim 10, **characterized by** the fact that said message is an agent communication language message.

12. A method according to any of claims 10 or 11, **characterized by** the fact that said piece of information is a request message requesting the sending of a message between mobile agents or is an answer message answering a request for the sending of a message between mobile agents.

13. A method according to any of claims 10 or 11, **characterized by** the fact that said piece of information is a migration request message requesting the migration of a mobile agent from the first terminal to the second terminal or is an answer message answering a migration request for the migration of a mobile agent from the first terminal to the second terminal, said answer message being a refusal to the migration request or an acceptance of the migration request.

14. A method according to claim 9, **characterized by** the fact that said extraction step further comprises:
- extracting additional data of said mobile agent.

15. A method according to any of claims 9 to 14, **characterized by** the fact that when said first terminal, is a cellular terminal (60, 70), said agent platform identifier (3') of said first terminal (60, 70) is the MSISDN associated with said cellular terminal (60, 70).

16. A method according to any of claims 9 to 14, **characterized by** the fact that when said first terminal is a non-cellular terminal (80), said agent platform identifier (3') of said first terminal (80) is a short code address associated with said non-cellular terminal (80).

17. A terminal of a telecommunications network comprising:
- at least one mobile agent;
- at least one mobile agent platform to which said at least one mobile agent belongs;
- means for creating a Multimedia Messaging Service message (9, 9');
- means for assigning to a field of the header (100, 100') of said Multimedia Messaging Service message (9, 9') an agent platform identifier (3') of a second terminal with which the terminal can exchange information relating to at least one mobile agent;
- means for assigning to a field (210, 220, 230, 240) of the body (200, 200') of said Multimedia Messaging Service message (9, 9') at least one piece of information relating to a mobile agent;
- means for sending said MMS message (9, 9µ') to said second terminal,
the terminal being **characterized by** the fact that said piece of information relating to a mobile agent comprises at least one mobile agent identifier and an executable code of the mobile agent.

18. A terminal according to claim 17, **characterized by** the fact that said piece of information relating to a mobile agent comprises a message between a mobile agent of the terminal and a mobile agent of the second terminal.

19. A terminal according to claim 18, **characterized by** the fact that said message is an agent communication language message.

20. A terminal according to claim 17, **characterized by** the fact that said information relating to a mobile agent further comprises additional data of said mobile agent.

21. A terminal according to any of claims 17 to 20, **characterized by** being a cellular telephony terminal (60, 70).

22. A terminal according to any of claims 17 to 20, characterize by being a non-cellular terminal (80).

23. A telecommunications network comprising at least one terminal according to any of claims 17 to 22.

24. A telecommunications system comprising:
- a cellular telecommunications network (20),
- a Multimedia Messaging Service centre (50) in turn comprising an MMS Proxy/Relay (10) and an MMS server (30);
**characterized by** the fact that said cellular telecommunications network (20) comprises at least one terminal according to any of claims 17 to 21.

25. A telecommunications system according to claim 24, **characterized by** further comprising at least one non-cellular terminal (80) according to claim 22.

## Patentansprüche

1. Verfahren zum Übertragen von MMS-(Multimedia Messaging Service)-Nachrichten in einem Telekommunikationsnetz, das wenigstens ein erstes und ein zweites Endgerät umfasst, wobei die genannten Endgeräte jeweils wenigstens eine Agentenplattform und einen Mobilfunk-Agent umfassen, wobei wenigstens eines der Endgeräte ein zelluläres Endgerät ist, wobei das Verfahren die folgenden Schritte beinhaltet:
- Zuordnen zu einem Feld des Kopfes (100, 100') einer MMS-Nachricht (9, 9'), in einem ersten Endgerät (60), einer Kennung (3') einer Agentenplattform (75, 85) eines zweiten Endgeräts (70, 80), mit dem das erste Endgerät (60) Informationen über wenigstens einen Mobilfunk-Agenten (65-1, 65-2, ... 65-i) austauschen kann;
- Zuordnen zu wenigstens einem Feld (210, 220, 230, 240) des Texts (200, 200') der genannten MMS-Nachricht (9, 9') wenigstens einer Information in Bezug auf einen Mobilfunk-Agenten (65-1, 65-2, ... 65-i);
- Senden der genannten MMS-Nachricht (9, 9') von dem genannten ersten Endgerät (60) zu dem genannten zweiten Endgerät (70, 80),
wobei das Verfahren **dadurch gekennzeichnet ist, dass** der genannte Schritt des Zuordnens von wenigstens einer Information in Bezug auf einen Mobilfunk-Agenten (65-1, 65-2, ... 65-i) Folgendes beinhaltet:
- Zuordnen zu einem Feld (220) des Texts (200) der genannten MMS-Nachricht (9) einer Kennung für die Mobilfunk-Agenten (65-1, 65-2, ... 65-i);
- Zuordnen zu einem zweiten Feld (210) der genannten MMS-Nachricht (9) eines ablauffähigen Code des genannten Mobilfunk-Agenten (65-1, 65-2, ... 65-i).

2. Verfahren nach Anspruch 1, **dadurch gekennzeichnet, dass** die genannte Information in Bezug auf einen Mobilfunk-Agenten eine Nachricht zwischen dem genannten Mobilfunk-Agenten (65-1, 65-2, ..., 65-i) des ersten Endgeräts (60) und einem Mobilfunk-Agenten (75-1, 75-2, ..., 75-j, 85-1, 85-2, ..., 85-k) des zweiten Endgeräts (70, 80) umfasst.

3. Verfahren nach Anspruch 2, **dadurch gekennzeichnet, dass** die genannte Nachricht eine Nachricht in einer Agentenkommunikationssprache ist.

4. Verfahren nach Anspruch 2 oder 3, **dadurch gekennzeichnet, dass** die genannte Information eine Anforderungsnachricht ist, die das Senden einer Nachricht zwischen Mobilfunk-Agenten anfordert, oder eine Antwortnachricht ist, die eine Anforderung zum Senden einer Nachricht zwischen Mobilfunk-Agenten beantwortet.

5. Verfahren nach Anspruch 2 oder 3, **dadurch gekennzeichnet, dass** die genannte Information eine Migrationsanforderungsnachricht ist, die die Migration eines Mobilfunk-Agenten vom ersten Endgerät zum zweiten Endgerät anfordert, oder eine Antwortnachricht ist, die eine Migrationsanforderung für die Migration eines Mobilfunk-Agenten vom ersten Endgerät zum zweiten Endgerät beantwortet, wobei die genannte Antwortnachricht entweder eine Ablehnung der Migrationsanforderung oder eine Annahme der Migrationsanforderung ist.

6. Verfahren nach Anspruch 1, **dadurch gekennzeichnet, dass** der Zuordnungsschritt ferner Folgendes beinhaltet:
- Zuordnen zu einem dritten Feld (230) der genannten MMS-Nachricht (9) zusätzlicher Daten des genannten Mobilfunk-Agenten (65-1, 65-2, ..., 65-i).

7. Verfahren nach einem der vorherigen Ansprüche, **dadurch gekennzeichnet, dass**, wenn das genannte zweite Endgerät (70, 80) ein zelluläres Endgerät (70) ist, die genannte Kennung (3') der genannten Agentenplattform (75, 85) des genannten zweiten Endgeräts (70) die mit dem genannten zellulären Endgerät (70) assoziierte MSISDN ist.

8. Verfahren nach einem der Ansprüche 1 bis 3, **dadurch gekennzeichnet, dass**, wenn das genannte zweite Endgerät (70, 80) ein nichtzelluläres Endgerät (80) ist, die genannte Kennung (3') der Agentenplattform (85) des genannten zweiten Endgeräts (80) eine mit dem genannten nichtzellulären Endgerät (80) assoziierte Kurzcode-Adresse ist.

9. Verfahren zum Empfangen von MMS-Nachrichten in einem Telekommunikationsnetz, das wenigstens ein erstes und ein zweites Endgerät umfasst, die wiederum jeweils wenigstens eine Agentenplattform und einen Mobilfunk-Agenten umfassen, wobei wenigstens eines der Endgeräte ein zelluläres Endgerät ist, das die folgenden Schritte beinhaltet:
- Empfangen einer MMS-Nachricht (9, 9') in einem ersten Endgerät;
- Extrahieren aus wenigstens einem Feld (210, 220, 230, 240) des Texts (200, 200') der genannten MMS-Nachricht (9, 9') wenigstens einer Information über einen von einem zweiten Endgerät kommenden Mobilfunk-Agenten;
wobei der Schritt des Empfangens einer MMS-Nachricht (9, 9') das Extrahieren einer Agentenplattform-Kennung (3') des genannten ersten Endgeräts aus einem Feld des Kopfs (100, 100') der genannten MMS-Nachricht (9, 9') beinhaltet,
wobei das Verfahren **dadurch gekennzeichnet ist, dass** der genannte Schritt des Extrahierens von wenigstens einer Information in Bezug auf einen von einem zweiten Endgerät kommenden Mobilfunk-Agenten Folgendes beinhaltet:
- Extrahieren eines ablauffähigen Code des genannten Mobilfunk-Agenten;
- Extrahieren einer Kennung des genannten Mobilfunk-Agenten.

10. Verfahren nach Anspruch 9, **dadurch gekennzeichnet, dass** die genannte Information in Bezug auf einen von einem zweiten Endgerät kommenden Mobilfunk-Agenten eine Nachricht zwischen dem genannten von dem zweiten Endgerät kommenden Mobilfunk-Agenten und einem Mobilfunk-Agenten des ersten Endgeräts beinhaltet.

11. Verfahren nach Anspruch 10, **dadurch gekennzeichnet, dass** die genannte Nachricht eine Nachricht in einer Agentenkommunikationssprache ist.

12. Verfahren nach Anspruch 10 oder 11, **dadurch gekennzeichnet, dass** die genannte Information eine Anforderungsnachricht ist, die das Senden einer Nachricht zwischen Mobilfunk-Agenten anfordert, oder eine Antwortnachricht ist, die eine Anforderung zum Senden einer Nachricht zwischen Mobilfunk-Agenten ist.

13. Verfahren nach Anspruch 10 oder 11, **dadurch gekennzeichnet, dass** die genannte Information eine Migrationsanforderungsnachricht ist, die die Migration eines Mobilfunk-Agenten vom ersten Endgerät zum zweiten Endgerät anfordert, oder eine Antwortnachricht ist, die eine Migrationsanforderung für die Migration eines Mobilfunk-Agenten vom ersten Endgerät zum zweiten Endgerät beantwortet, wobei die genannte Antwortnachricht eine Ablehnung der Migrationsanforderung oder eine Annahme der Migrationsanforderung ist.

14. Verfahren nach Anspruch 9, **dadurch gekennzeichnet, dass** der genannte Extraktionsschritt ferner Folgendes beinhaltet:
- Extrahieren zusätzlicher Daten des genannen Mobilfunk-Agenten.

15. Verfahren nach einem der Ansprüche 9 bis 14, **dadurch gekennzeichnet, dass**, wenn das genannte erste Endgerät ein zelluläres Endgerät (60, 70) ist, die genannte Agentenplattform-Kennung (3') des genannten ersten Endgeräts (60, 70) die mit dem genannten zellulären Endgerät (60, 70) assoziierte MSISDN ist.

16. Verfahren nach einem der Ansprüche 9 bis 14, **dadurch gekennzeichnet, dass**, wenn das genannte erste Endgerät ein nichtzelluläres Endgerät (80) ist, die genannte Agentenplattform-Kennung (3') des genannten ersten Endgeräts (80) eine mit dem genannten nichtzellulären Endgerät (80) assoziierte Kurzcode-Adresse ist.

17. Endgerät eines Telekommunikationsnetzes, das Folgendes umfasst:
- wenigstens einen Mobilfunk-Agenten;
- wenigstens eine Mobilfunk-Agentenplattform, zu der der genannte wenigstens eine Mobilfunk-Agent gehört;
- Mittel zum Erzeugen einer MMS-Nachricht (9, 9');
- Mittel zum Zuordnen zu einem Feld des Kopfs (100, 100') der genannten MMS-Nachricht (9, 9') einer Agentenplattform-Kennung (3') eines zweiten Endgeräts, mit dem das Endgerät Informationen über wenigstens einen Mobilfunk-Agenten austauschen kann;
- Mittel zum Zuordnen zu einem Feld (210, 220, 230, 240) des Texts (200, 200') der genannten MMS-Nachricht (9, 9') wenigstens einer Information über einen Mobilfunk-Agenten;
- Mittel zum Senden der genannten MMS-Nachricht (9, 9') zu dem genannten zweiten Endgerät,
wobei das Endgerät **dadurch gekennzeichnet ist, dass** die genannte Information über einen Mobilfunk-Agenten wenigstens eine Mobilfunk-Agenten-Kennung und einen ablauffähigen Code des Mobilfunk-Agenten beinhaltet.

18. Endgerät nach Anspruch 17, **dadurch gekennzeichnet, dass** die genannte Information in Bezug auf einen Mobilfunk-Agenten eine Nachricht zwischen einem Mobilfunk-Agenten des Endgeräts und einem Mobilfunk-Agenten des zweiten Endgeräts beinhaltet.

19. Endgerät nach Anspruch 18, **dadurch gekennzeichnet, dass** die genannte Nachricht eine Nachricht in einer Agentenkommunikationssprache ist.

20. Endgerät nach Anspruch 17, **dadurch gekennzeichnet, dass** die genannte Information über einen Mobilfunk-Agenten ferner zusätzliche Daten über den genannten Mobilfunk-Agenten beinhaltet.

21. Endgerät nach einem der Ansprüche 17 bis 20, **dadurch gekennzeichnet, dass** es ein zelluläres Telefonieendgerät (60, 70) ist.

22. Endgerät nach einem der Ansprüche 17 bis 20, **dadurch gekennzeichnet, dass** es ein nichtzelluläres Endgerät (80) ist.

23. Telekommunikationsnetz, das wenigstens ein Endgerät nach einem der Ansprüche 17 bis 22 umfasst.

24. Telekommunikationssystem, das Folgendes umfasst:
- ein zelluläres Telekommunikationsnetz (20),
- ein MMS-(Multimedia Messaging Service)-Zentrum (50), das wiederum einen MMS-Proxy/Relais (10) und einen MMS-Server (30) umfasst;
**dadurch gekennzeichnet, dass** das genannte zelluläre Telekommunikationsnetz (20) wenigstens ein Endgerät nach einem der Ansprüche 17 bis 21 umfasst.

25. Telekommunikationssystem nach Anspruch 24, **dadurch gekennzeichnet, dass** es ferner wenigstens ein nichtzelluläres Endgerät (80) nach Anspruch 22 umfasst.

## Revendications

1. Procédé de transmission de messages MMS (service de messagerie multimédia) dans un réseau de télécommunications comportant au moins un premier terminal et un second terminal, où lesdits terminaux comprennent au moins une plate-forme d'agents et un agent mobile respectivement, où au moins l'un des terminaux est un terminal cellulaire, le procédé englobant les étapes consistant à :
- dans un premier terminal (60), attribuer à un champ de l'en-tête (100, 100') d'un message MMS (service de messagerie multimédia) (9, 9'), un identifiant (3') d'une plate-forme d'agents (75, 85) d'un second terminal (70, 80) avec lequel le premier terminal (60) peut échanger des informations relatives à au moins un agent mobile (65-1, 65-2, ..., 65-i) ;
- attribuer à au moins un champ (210, 220, 230, 240) du corps (200, 200') dudit message MMS (service de messagerie multimédia) (9, 9'), au moins un élément d'information relatif à un agent mobile (65-1, 65-2, ..., 65-i) ;
- envoyer ledit message MMS (9, 9') à partir dudit premier terminal (60) vers ledit second terminal (70, 80),
le procédé étant **caractérisé en ce que** ladite étape d'attribution d'au moins un élément d'information relatif à un agent mobile (65-1, 65-2, ..., 65-i) englobe les opérations consistant à :
- attribuer à un champ (220) du corps (200) dudit message MMS (service de messagerie multimédia) (9), un identifiant d'agent mobile (65-1, 65-2, ..., 65-i) ;
- attribuer à un deuxième champ (210) dudit message MMS (service de messagerie multimédia) (9), un code exécutable dudit agent mobile (65-1, 65-2, ..., 65-i).

2. Procédé selon la revendication 1, **caractérisé par le fait que** ledit élément d'information relatif à un agent mobile comprend un message entre ledit agent mobile (65-1, 65-2, ..., 65-i) du premier terminal (60) et un agent mobile (75-1, 75-2, ..., 75j, 85-1, 85-2, ..., 85-k) du second terminal (70, 80).

3. Procédé selon la revendication 2, **caractérisé par le fait que** ledit message est un message à langage de communication entre agents.

4. Procédé selon l'une quelconque des revendications 2 ou 3, **caractérisé par le fait que** ledit élément d'information est un message de demande qui demande l'envoi d'un message entre des agents mobiles ou est un message de réponse qui répond à une demande pour l'envoi d'un message entre des agents mobiles.

5. Procédé selon l'une quelconque des revendications 2 ou 3, **caractérisé par le fait que** ledit élément d'information est un message de demande de migration qui demande la migration d'un agent mobile à partir du premier terminal vers le second terminal ou un message de réponse qui répond à une demande de migration pour la migration d'un agent mobile à partir du premier terminal vers le second terminal, ledit message de réponse étant soit un refus à la demande de migration, soit une acceptation de la demande de migration.

6. Procédé selon la revendication 1, **caractérisé par le fait que** ladite étape d'attribution comprend en outre l'opération consistant à :
- attribuer à un troisième champ (230) dudit message MMS (service de messagerie multimédia) (9), des données additionnelles dudit agent mobile (65-1, 65-2, ..., 65-i).

7. Procédé selon l'une quelconque des revendications précédentes, **caractérisé par le fait que**, lorsque ledit second terminal (70, 80) est un terminal cellulaire (70), ledit identifiant (3') de la plate-forme d'agents (75, 85) dudit second terminal (70) est le MSISDN associé audit terminal cellulaire (70).

8. Procédé selon l'une quelconque des revendications 1 à 6, **caractérisé par le fait que**, lorsque ledit second terminal (70, 80) est un terminal non cellulaire (80), ledit identifiant (3') de la plate-forme d'agents (85) dudit second terminal (80) est une adresse à code abrégé associée audit terminal non cellulaire (80).

9. Procédé de réception de messages MMS (service de messagerie multimédia) dans un réseau de télécommunications comportant au moins un premier terminal et un second terminal, comprenant à leur tour au moins une plate-forme d'agents et un agent mobile respectivement, où au moins l'un des terminaux est un terminal cellulaire, englobant les étapes consistant à :
- recevoir dans un premier terminal un message MMS (service de messagerie multimédia) (9, 9') ;
- extraire à partir d'au moins un champ (210, 220, 230, 240) du corps (200, 200') dudit message MMS (service de messagerie multimédia) (9, 9'), au moins un élément d'information relatif à un agent mobile arrivant d'un second terminal ;
cas dans lequel l'étape de réception d'un message MMS (service de messagerie multimédia) (9, 9') comprend l'extraction, à partir d'un champ de l'en-tête (100, 100') dudit message MMS (service de messagerie multimédia) (9, 9') un identifiant de plate-forme d'agents (3') dudit premier terminal,
le procédé étant **caractérisé en ce que** ladite étape destinée à extraire au moins un élément d'information relatif à un agent mobile arrivant d'un second terminal comprend :
- l'extraction d'un code exécutable dudit agent mobile ;
- l'extraction d'un identifiant dudit agent mobile.

10. Procédé selon la revendication 9, **caractérisé par le fait que** ledit élément d'information relatif à un agent mobile arrivant d'un second terminal comprend un message entre ledit agent mobile arrivant du second terminal et un agent mobile du premier terminal.

11. Procédé selon la revendication 10, **caractérisé par le fait que** ledit message est un message à langage de communication entre agents.

12. Procédé selon l'une quelconque des revendications 10 ou 11, **caractérisé par le fait que** ledit élément d'information est un message de demande qui demande l'envoi d'un message entre des agents mobiles ou est un message de réponse qui répond à une demande pour l'envoi d'un message entre des agents mobiles.

13. Procédé selon l'une quelconque des revendications 10 ou 11, **caractérisé par le fait que** ledit élément d'information est un message de demande de migration qui demande la migration d'un agent mobile à partir du premier terminal vers le second terminal ou est un message de réponse qui répond à une demande de migration pour la migration d'un agent mobile à partir du premier terminal vers le second terminal, ledit message de réponse étant un refus à la demande de migration ou une acceptation de la demande de migration.

14. Procédé selon la revendication 9, **caractérisé par le fait que** ladite étape d'extraction comprend en outre :
- l'extraction de données additionnelles dudit agent mobile.

15. Procédé selon l'une quelconque des revendications 9 à 14, **caractérisé par le fait que**, lorsque ledit premier terminal est un terminal cellulaire (60, 70), ledit identifiant de plate-forme d'agents (3') dudit premier terminal (60, 70) est le MSISDN associé audit terminal cellulaire (60, 70).

16. Procédé selon l'une quelconque des revendications 9 à 14, **caractérisé par le fait que**, lorsque ledit premier terminal est un terminal non cellulaire (80), ledit identifiant de plate-forme d'agents (3') dudit premier terminal (80) est une adresse à code abrégé associée audit terminal non cellulaire (80).

17. Terminal d'un réseau de télécommunications comprenant :
- au moins un agent mobile ;
- au moins une plate-forme d'agents mobiles à laquelle appartient au moins un agent mobile ;
- des moyens pour créer un message MMS (service de messagerie multimédia) (9,9);
- des moyens pour attribuer à un champ de l'en-tête (100, 100') dudit message MMS (service de messagerie multimédia) (9, 9'), un identifiant de plate-forme d'agents (3') d'un second terminal avec lequel le terminal peut échanger des informations relatives à au moins un agent mobile ;
- des moyens pour attribuer à un champ (210, 220, 230, 240) du corps (200, 200') dudit message MMS (service de messagerie multimédia) (9, 9'), au moins un élément d'information relatif à un agent mobile ;
- des moyens pour envoyer ledit message MMS (9, 9') audit second terminal,
le terminal étant **caractérisé par le fait que** ledit élément d'information relatif à un agent mobile comprend au moins un identifiant d'agent mobile et un code exécutable de l'agent mobile.

18. Terminal selon la revendication 17, **caractérisé par le fait que** ledit élément d'information relatif à un agent mobile comprend un message entre un agent mobile du terminal et un agent mobile du second terminal.

19. Terminal selon la revendication 18, **caractérisé par le fait que** ledit message est un message à langage de communication entre agents.

20. Terminal selon la revendication 17, **caractérisé par le fait que** lesdites informations relatives à un agent mobile comprennent en outre des données additionnelles dudit agent mobile.

21. Terminal selon l'une quelconque des revendications 17 à 20, **caractérisé en ce qu'**il est un terminal à téléphonie cellulaire (60, 70).

22. Terminal selon l'une quelconque des revendications 17 à 20, **caractérisé en ce qu'**il est un terminal non cellulaire (80).

23. Réseau de télécommunications comportant au moins un terminal selon l'une quelconque des revendications 17 à 22.

24. Système de télécommunications comprenant :
- un réseau de télécommunications cellulaires (20),
- un centre MMS (service de messagerie multimédia) (50) lequel comporte à son tour un relais/un mandataire MMS (10) et un serveur MMS (30) ;
**caractérisé par le fait que** ledit réseau de télécommunications cellulaires (20) englobe au moins un terminal selon l'une quelconque des revendications 17 à 21.

25. Système de télécommunications selon la revendication 24, **caractérisé en ce qu'**il comprend en outre au moins un terminal non cellulaire (80) selon la revendication 22.
